# EUROPÄISCHE PATENTANMELDUNG

(11) **EP 2 133 233 A2**
(43) Veröffentlichungstag der Anmeldung: **16.12.2009**
(21) Anmeldenummer: 09006712.5
(22) Anmeldetag: 19.05.2009
(51) Int. Cl.: B60N 2/06, F16F 1/38, F16H 25/24

(54) **Spindel-Lageranordnung für ein Sitzlängsverstellgetriebe**

(30) Priorität: 19.05.2008 DE 102008024141
(71) Anmelder: IMS Gear GmbH, 78166 Donaueschingen (DE)
(72) Erfinder: Synovzik, Wilfried, 78183 Hüfingen (DE)
(74) Vertreter: Göhring, Robert

(57) **Zusammenfassung**

Die Erfindung bezieht sich auf eine Spindel-Lageranordnung für ein Sitzlängsverstellgetriebe, welche ein Gehäuse (3) aufweist, das mit einer Befestigungsanordnung an einer fahrzeugseitigen Komponente oder an einer sitzseitigen Komponente befestigbar ist, wobei eine Spindelöffnung (2) zum Durchführen einer Spindel (1) längs einer Spindelöffnungsachse durch das Gehäuse durchführt und wobei ein Innengewinde im Gehäuse im Bereich von dessen Spindelöffnung zum Eingreifen in eine derart hindurchgeführte Spindel ausgebildet ist zum Verstellen des Gehäuses und der Spindel relativ zueinander längs der Spindelöffnungsachse. Vorteilhaft wird die Spindel-Lageranordnung dadurch, dass das Innengewinde in einer Spindelmutter (5) ausgebildet ist und die Spindelmutter im Gehäuse relativ zu der Spindelöffnungsachse verstellbar gelagert ist. Beansprucht wird außerdem ein Spindelantrieb in einem Sitzlängsverstellgetriebe mit einer solchen Spindel-Lageranordnung.

## Beschreibung

Die Erfindung bezieht sich auf eine Spindel-Lageranordnung für ein Sitzlängsverstellgetriebe mit den oberbegrifflichen Merkmalen des Patentanspruchs 1.

DE 198 61 100 B4 beschreibt einen Spindel- und Schneckenantrieb für Verstelleinrichtungen in Kraftfahrzeugen. Dargestellt ist insbesondere eine Spindel-Lageranordnung für ein Sitzlängsverstellgetriebe, welches ein Gehäuse zur Aufnahme einer Schnecke und einer Spindel aufweist. Das Gehäuse ist mit einer Befestigungsanordnung an einer Schiene eines Sitzgestells, das heißt an einer sitzseitigen Komponente befestigbar. Das Gehäuse weist eine Spindelöffnung zum Durchführen einer Spindel längs einer Spindelöffnungsachse durch das Gehäuse auf. Innerhalb des Gehäuses ist eine Art Spindelmutter angeordnet, welche zum Hindurchführen der Spindel ausgebildet ist. Die Spindel wird dabei passgenau und spielfrei in die Spindelmutter eingesetzt. Die Spindel ist drehfest an einer bodenseitigen Schiene befestigt, wobei die Schiene wiederum mit einem Bodenblech eines Fahrzeugs fest verbunden ist. Eine solche Anordnung ermöglicht eine Verstellung der Spindel längs des Gehäuses.

FR 2 749 053 A1 beschreibt eine Spindel-Lageranordnung für ein Sitzlängsverstellgetriebe mit einem Gehäuse, welches an einer bodenseitigen Schiene und über die Schiene mit einem Bodenblech eines Fahrzeugs fest verbunden ist. Das Gehäuse weist eine Spindelöffnung mit einem Innengewinde auf, wobei durch das Innengewinde eine Spindel geführt ist. Die Spindel ist drehbar an einer sitzseitigen Schiene befestigt. Durch eine Drehung der Spindel wird mit der Spindel zusammen die sitzseitige Schiene relativ zu dem ortsfesten Gehäuse in Längsrichtung der Spindel verstellt.

Problematisch bei derartigen Anordnungen ist, dass bei einer Montage eines Fahrzeugs die Schienen an dem Sitz bzw. an dem Bodenblech oftmals nicht exakt zueinander ausgerichtet werden. Auch die feste oder drehbare Montage der Spindel in einer der Schienen erfolgt oftmals mit einer Toleranz. Insbesondere durch eine oftmals schräg erfolgte Verschraubung der bodenseitigen Schiene sind die einzelnen Komponenten in deren Längsrichtung meist nicht exakt ausgerichtet. Ein weiteres Problem besteht darin, dass die Spindeln selber häufig nicht ganz gerade hergestellt sind. Dadurch entstehen üblicherweise Positionierungsfehler der einzelnen Komponenten mit einem Schienenabstand, welcher dazu führt, dass sich beim Laufen des Gehäuses längs der Spindel der Schienenabstand um oftmals 4/10 bis 5/10 mm ändert. In Einzelfällen sind auch deutlich größere Toleranzen gegeben. Durch solche Fertigungstoleranzen besteht das Problem, dass ein Spindelantrieb einer höheren Belastung unterzogen wird, wenn das Gehäuse längs der Spindel in Bereichen verstellt wird, in welchen keine exakte Ausrichtung vorliegt. Außerdem führen solche nicht exakten Ausrichtungen zu einem erhöhten Verschleiß der beteiligten Komponenten.

Die Aufgabe der Erfindung besteht darin, eine Spindel-Lageranordnung für ein Sitzlängsverstellgetriebe derart zu verbessern, dass Fertigungstoleranzen der Spindel und der Schienen besser ausgeglichen werden können.

Diese Aufgabe wird durch eine Spindel-Lageranordnung für ein Sitzlängsverstellgetriebe mit den Merkmalen des Patentanspruchs 1 gelöst. Vorteilhafte Ausgestaltungen sind Gegenstand von abhängigen Ansprüchen.

Ausgegangen wird demgemäß von einer Spindel-Lageranordnung für ein Sitzlängsverstellgetriebe, welche ein Gehäuse aufweist, das mit einer Befestigungsanordnung an einer fahrzeugseitigen Komponente oder an einer sitzseitigen Komponente befestigbar ist, wobei eine Spindelöffnung zum Durchführen einer Spindel längs einer Spindelöffnungsachse durch das Gehäuse durchführt und wobei ein Innengewinde im Gehäuse im Bereich von dessen Spindelöffnung zum Eingreifen in eine derart hindurchgeführte Spindel ausgebildet ist zum Verstellen des Gehäuses und der Spindel relativ zueinander längs der Spindelöffnungsachse. Vorteilhaft wird die Spindel-Lageranordnung dadurch, dass das Innengewinde in einer Spindelmutter ausgebildet ist und die Spindelmutter im Gehäuse relativ zu der Spindelöffnungsachse verstellbar gelagert ist.

Die Spindelöffnung kann zumindest abschnittsweise einen größeren Innendurchmesser als ein Durchmesser der Spindel der aufweisen. Der Innendurchmesser ist dabei insbesondere abschnittsweise in längs der Spindelöffnungsachse außenseitiger Richtung um einen solchen Betrag größer, dass die Spindel relativ zu der Spindelöffnungsachse innerhalb der Spindelöffnung ausreichend verkippbar und/oder seitlich ihrer Spindelachse verstellbar ist, um Einbautoleranzen insbesondere der Spindel relativ zu Sitzschienen ausgleichen zu können.

Die Spindelmutter kann im Gehäuse in seitlicher Richtung zu der Spindelöffnungsachse verstellbar gelagert sein. Ein dadurch ausgebildetes Spiel längs der seitlichen Richtung kann theoretisch beliebig groß sein. In praktischer Umsetzung wird jedoch ein auf wenige Zehntel Millimeter bis zu einem Millimeter begrenztes Spiel zum Verstellen der Spindelmutter ausreichen, um Einbautoleranzen der Spindel oder weiterer Komponenten insbesondere eines Sitzlängsverstellgetriebes auszugleichen. Vorteilhaft sind somit in dieser seitlichen Richtung quer ihrer Längserstreckung krumme oder durch Einbauspannungen verbogen verlaufende Spindeln oder Sitzschienen ausgleichbar.

Die Spindelmutter kann im Gehäuse um einen Winkel um eine in seitlicher Richtung zu der Spindelöffnungsachse verlaufende Drehachse drehbar gelagert sein. Ein solcher Winkel kann theoretisch beliebig groß sein. In praktischer Umsetzung wird jedoch ein auf wenige Grad begrenzter Winkel ausreichen, um Einbautoleranzen der Spindel oder weiterer Komponenten insbesondere eines Sitzlängsverstellgetriebes auszugleichen. Vorteilhaft sind somit in ihrer Längserstreckung quer zu dieser seitlichen Richtung krumme oder durch Einbauspannungen verbogen verlaufende Spindeln oder Sitzschienen ausgleichbar.

Gemäß einer ersten Ausführungsform verläuft diese seitliche Richtung in Richtung eines Befestigungselements der Befestigungsanordnung und/oder quer zu sowohl der Spindel als auch dem sitz- oder bodenseitigen Befestigungselement durch diese hindurch. Vorteilhaft sind so Ungenauigkeiten eines Abstands von Schienen und/oder der Spindel in sitzseitiger oder bodenseitiger Richtung ausgleichbar.

Gemäß einer zweiten Ausführungsform verläuft diese seitliche Richtung parallel zur Erstreckungsrichtung eines Befestigungselements der Befestigungsanordnung und/oder parallel zu einer ebenen Erstreckung eines Befestigungselements der Befestigungsanordnung und quer zur Spindelöffnungsachse X. Vorteilhaft sind so Ungenauigkeiten eines Verlaufs von Schienen und/oder der Spindel quer zur sitzseitigen oder bodenseitigen Richtung, d.h. in einer Ebene parallel zum Fahrzeugboden ausgleichbar.

Bei solchen Spindel-Lageranordnungen ist das Innengewinde in der Spindelmutter bevorzugt zum drehbaren aber spielfreien Aufnehmen der Spindel ausgebildet.

Die Spindelmutter ist bevorzugt mittels zumindest eines Dämpfungselements elastisch in dem Gehäuse gelagert. Geräusche beim Verstellen der Spindelmutter innerhalb des Gehäuses werden vermieden oder gedämpft, da die Spindelmutter und das Gehäuses, welche aus einem harten Material, insbesondere aus Metall, gefertigt sind, nicht direkt aneinander anstoßen können. Insbesondere kann eine elastomer- bzw. gummigelagerte Dämpfung vorgesehen sein.

Eigenständig vorteilhaft ist entsprechend auch ein Spindelantrieb in einem Sitzlängsverstellgetriebe mit einer derart ausgebildeten Spindel-Lageranordnung.

Bereitgestellt wird somit eine Spindel-Lageranordnung für Sitzlängsverstellgetriebe zum Ausgleich von Fluchtungsfehlern der Sitzunterschiene und der Sitzoberschiene durch eine drehbare und/oder verschiebbare Lagerung der Spindelmutter in dem Gehäuse. Somit sind zwischen der Sitzunterschiene und der Sitzoberschiene sowie gegebenenfalls der darin geführten Spindel Fluchtungsfehler ausgleichbar, welche übliche herstellungsbedingte Toleranzen bei Sitzschienen zur Längsverstellung berücksichtigen lassen. Auch werden Fluchtungsfehler ausgeglichen, welche im Betrieb bei Belastung des Sitzes über eine übliche Belastung hinaus entstehen. Ein weiterer Vorteil besteht in der einfachen Bearbeitungsmöglichkeit der einzelnen verwendeten Komponenten. Neben der Verstellbarkeit der Spindelmutter innerhalb des Gehäuses ist ein weiterer vorteilhafter Aspekt die Beweglichkeit der Gehäuseteile in der Schiene bzw. die Beweglichkeit der Spindel in der durch das Gehäuse führenden Spindelöffnung. Zur Halterung des Gehäuses kann optional ein Halter mit einer Rechteckaussparung sowie ein Elastomer zur Aufnahme und/oder zur Isolierung der Spindelmutter vorgesehen sein.

Einsetzbar ist eine solche Spindel-Lageranordnung sowohl bei Ausführungsformen mit einer fest in einer Schiene stehenden Spindel als auch bei einer Ausführungsform mit einer drehbar in einer Sitzschiene gelagerten Spindel.

Ein Ausführungsbeispiel wird nachfolgend anhand der Zeichnung näher erläutert. Für gleiche oder gleich wirkende Komponenten werden bei der Beschreibung der verschiedenen Ausführungsformen gleiche Bezugszeichen verwendet. Zu der Beschreibung der zweiten Ausführungsform wird bezüglich bei der ersten Ausführungsform beschriebenen gleichen Komponenten auf deren Beschreibung verwiesen. Es zeigen:
- Fig. 1: eine perspektivische Ansicht eines Gehäuses einer Spindel-Lageranordnung mit einer in dem Gehäuse ver- stellbar gelagerten Spindelmutter und einer durch das Gehäuse und durch die Spindelmutter führenden Spin- del;
- Fig. 2: eine Schnittansicht durch die Anordnung gemäß Fig. 1,
- Fig. 3: eine perspektivische Ansicht einer zweiten Ausfüh- rungsform einer derartigen Spindel-Lageranordnung und
- Fig. 4: eine Schnittansicht durch die Anordnung gemäß Fig. 3.

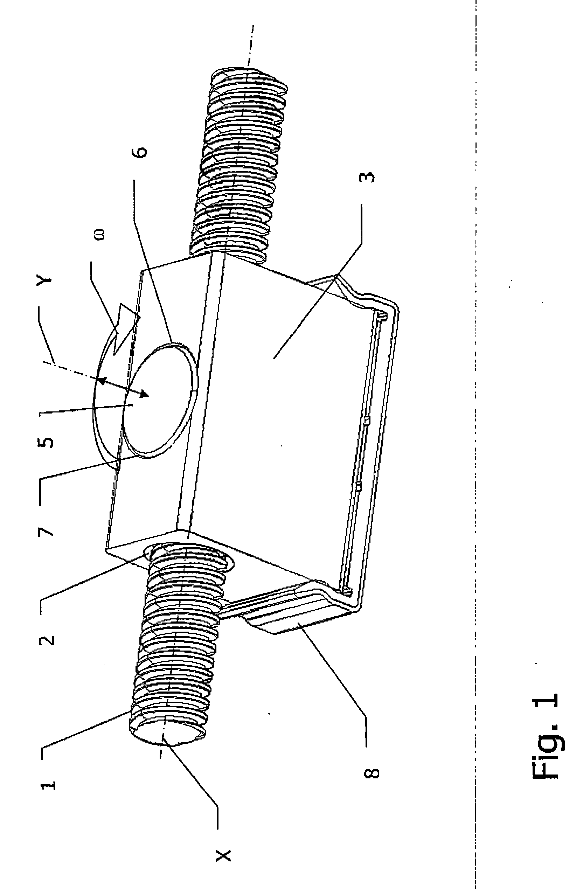

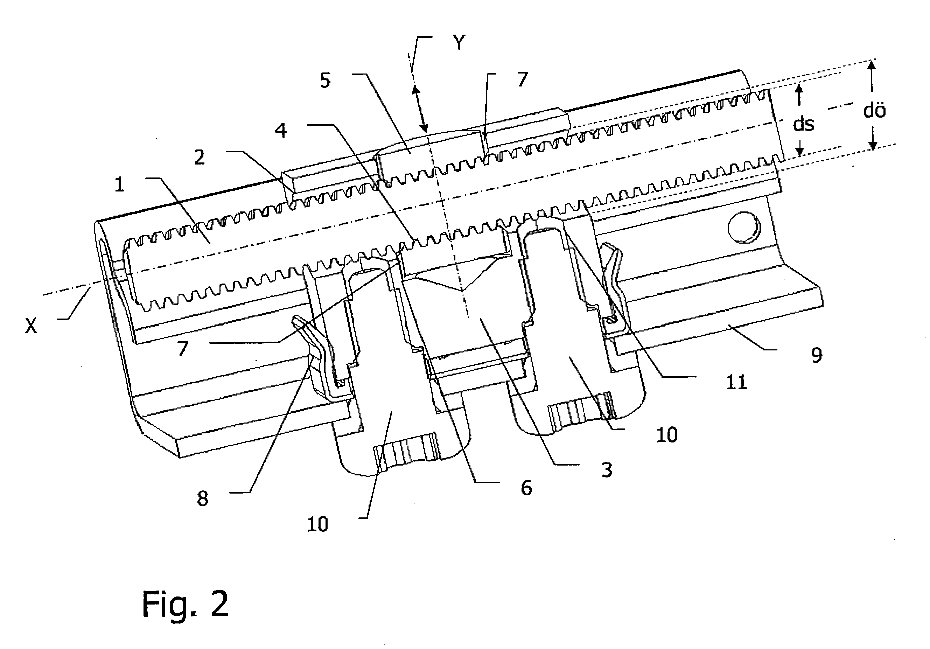

Fig. 1 und 2 zeigen eine Spindel 1, welche durch eine Spindelöffnung 2 eines Gehäuses 3 führt. Die Spindel 1 greift mit ihrem außenseitigen Gewinde vorzugsweise passgenau in ein Innengewinde 4 einer Spindelmutter 5 ein. Die Spindelmutter 5 ist in einer Spindelmutteraufnahme 6 ausgebildet, welche als ein freier Raum innerhalb des Gehäuses 3 ausgebildet ist.

Die Spindelmutteraufnahme 6 und die Spindelmutter sind dabei so dimensioniert, dass die Spindelmutter 5 im Gehäuse 1 relativ zu einer Spindelöffnungsachse X der Spindelöffnung 2 verstellbar, insbesondere seitlich verstellbar und verkippbar gelagert ist.

Um ausreichend Raum für eine Verstellung der Spindelmutter 5 und der darin geführten Spindel 1 relativ zu der Spindelöffnung 2 bzw. relativ zu dem Gehäuse 1 zu bieten, weist die Spindelöffnung 2 einen Innendurchmesser dö größer als einem Durchmesser ds der Spindel 1 auf. Dadurch kann die Spindel 1 innerhalb der Spindelöffnung 2 seitlich verstellt bzw. insbesondere verkippt werden. In Verbindung mit einer entsprechend groß dimensionierten Spindelmutteraufnahme 6 kann die Spindel 1 somit vorzugsweise sowohl um einen Punkt innerhalb der Spindelmutter 5 mit einer Spindelachse relativ zur Spindelöffnungsachse X verkippt werden, als auch in einer seitlichen Richtung Y zur Spindelöffnungsachse X verstellt werden. Die Spindelöffnungsachse X und die Spindelachse sind somit beim Verstellen beim Ausgleichen von Fluchtungsfehlern in den meisten einstellbaren Lagen nicht deckungsgleich.

Die Spindelmutteraufnahme 6 ist vorzugsweise als ein zylindrischer Raum ausgebildet, welcher sich in seitlicher Richtung Y beidseitig zur Spindelöffnungsachse X in dem Gehäuse 3 erstreckt. Die in der zylindrichen Spindelmutteraufnahme 6 eingesetzte Spindelmutter 5 ist vorzugsweise als ein zylindrischer Körper ausgebildet, so dass die Spindelmutter 5 um die sich in der seitlichen Richtung Y erstreckenden Rotationsachse der Spindelmutter 5 um einen Winkel ω drehbar ist.

Vorzugsweise ist die Spindelmutteraufnahme 6 so lang ausgebildet, dass die Spindelmutter 5 längs ihrer Rotationsachse in der seitlichen Richtung Y zur Spindelöffnungsachse X verstellt werden kann. Die Durchführungsöffnung mit dem Innengewinde 4, welche durch die Spindelmutter 5 zur Durchführung der Spindel 1 hindurchführt, ist quer zur Rotationsachse der Spindelmutter 5 durch den Körper der Spindelmutter 5 hindurchgeführt.

Vorzugsweise führt die Spindelmutteraufnahme 6 an einer Seite in Richtung der Rotationsachse der eingesetzten Spindelmutter 5 durch die Wandung des Gehäuses 3 bis zur Außenseite des Gehäuses 3. Dies erleichtert eine Montage da die Spindelmutter 5 in einem ersten Schritt von der Außenseite her in die Spindelmutteraufnahme 6 eingeschoben werden kann, um in einem nachfolgenden zweiten Schritt die Spindel 1 durch die Anordnung aus dem Gehäuse 3 mit der darin eingesetzten Spindelmutter 5 zu führen.

Vorzugsweise sind in einem Bereich zwischen einer innenseitigen Wandung der Spindelmutteraufnahme 6 und einer Außenwandung der Spindelmutter 5 eines oder mehrere Dämpfungselemente 7 aus einem elastischen Material eingesetzt. Die Dämpfungselemente 7 sind dabei derart beschaffen, dass die Spindelmutter 5 innerhalb des Gehäuses 3 ausreichend Spiel zur Verstellung in insbesondere der seitlichen Richtung Y und zur Rotation um einen erforderlichen Winkel ω behält. Auch ein seitliches Verkippen der Spindel 1 relativ zur Spindelöffnungsachse X wird durch den Einsatz solcher Dämpfungselemente zumindest bedingt unterstützt.

Zur Befestigung des Gehäuses 3 dient, wie insbesondere anhand von Fig. 2 skizziert, eine Befestigungsanordnung, welche aus gegebenenfalls mehreren Komponenten besteht. Bei der beispielhaften Befestigungsanordnung umgreift eine Halteklammer 8 das Gehäuse 3 von drei Seiten, wobei die Längserstreckung der Halteklammer 8 auf deren mittleren Abschnitt parallel zur Spindelöffnungsachse X führt. Die seitlichen Schenkel der Halteklammer 8 umgreifen somit einen Teil des Gehäuses 3 in einer Verstellrichtung der Spindel 1 relativ zu einer Schiene 9, an welcher die Halteklammer 8 mittels beispielsweise Schrauben 10 befestigt ist. Zur Befestigung der Schrauben 10 führen entsprechende Befestigungsbohrungen durch die Schiene 9 und die Halteklammer 8 fluchtend zu entsprechenden Befestigungsbohrungen 11, welche in den Körper des Gehäuses 3 hineinführen, um diese Komponenten miteinander zu verschrauben.

Bei der anhand der Fig. 1 und 2 skizzierten ersten Ausführungsform ist die Ausrichtung der Spindelmutteraufnahme 6 und der Spindelmutter 5 so gewählt, dass die seitliche Richtung Y zur Spindelöffnungsachse X quer zur Spindel 1 und quer zur Schiene 9 führt, wobei die Rotationsachse der Spindelmutter 5 dabei sowohl die Spindel 1 als auch die Schiene 9 schneidet. Die seitliche Richtung Y führt somit in Richtung eines bodenseitigen Befestigungselements in Form der Schiene 9 der Befestigungsanordnung bzw. zu einer entsprechenden sitzseitigen Schiene bei einer umgekehrten Ausgestaltung. Mit anderen Worten verläuft die seitliche Richtung Y quer zu sowohl der Spindel als auch dem sitz- oder bodenseitigen Befestigungselement und durch diese hindurch.

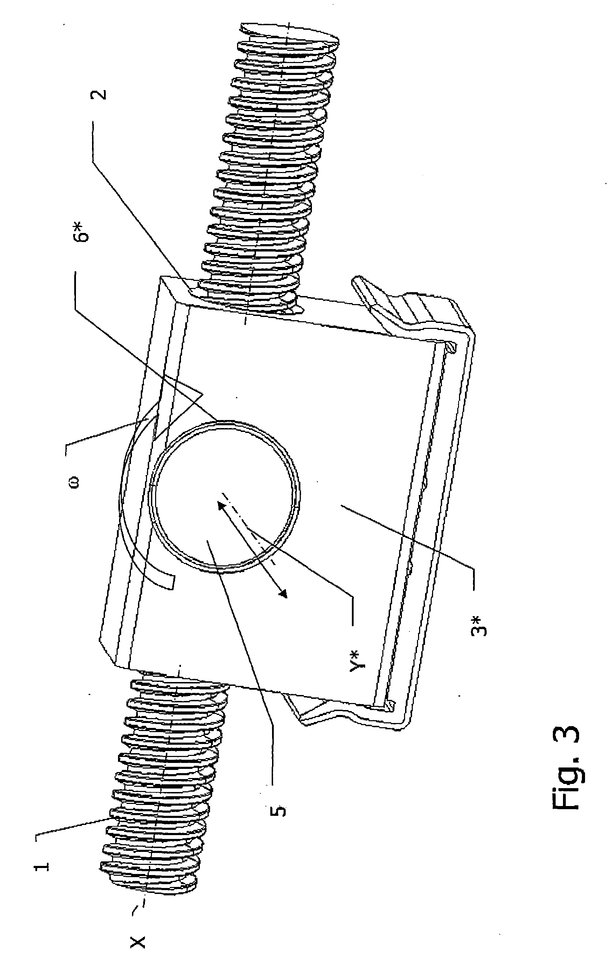

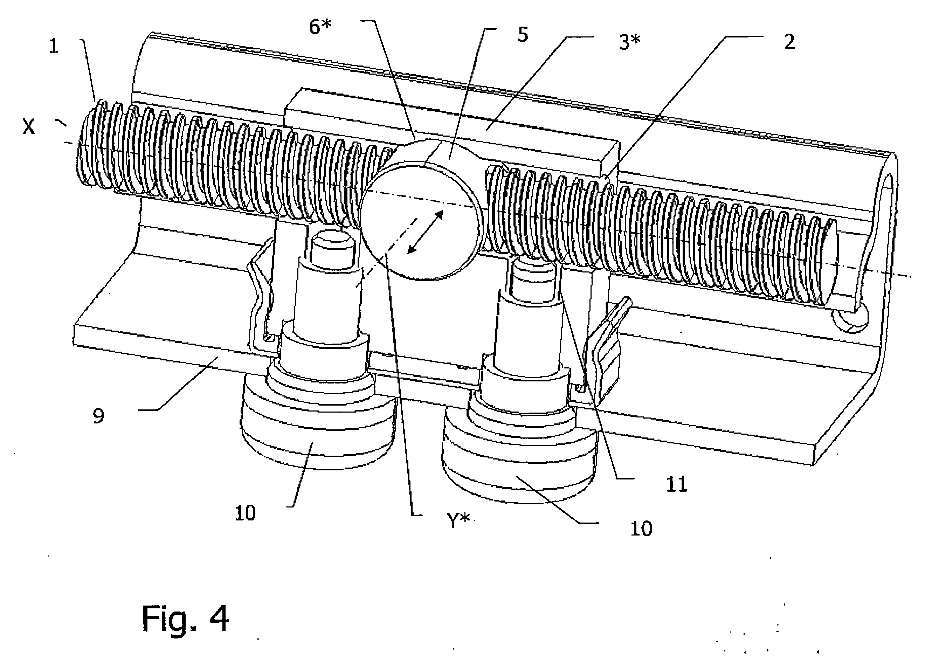

Gemäß der zweiten, anhand der Fig. 3 und 4 skizzierten Ausführungsform sind die Spindelmutteraufnahme 6* und die seitliche Richtung Y* so in dem Gehäuse 3* angeordnet, dass die seitliche Richtung Y* parallel zur Erstreckungsrichtung des Befestigungselements in Form der Sitzschiene 9 der Befestigungsanordnung und quer zur spindelöffnungsachse X verläuft. Mit anderen Worten verläuft die seitliche Richtung Y* bei dieser zweiten Ausführungsform parallel zu einer ebenen Erstreckung der sitzseitigen oder der bodenseitigen Schiene 9.

## Patentansprüche

1. Spindel-Lageranordnung für ein Sitzlängsverstellgetriebe, aufweisend ein Gehäuse (3; 3*), das mit einer Befestigungsanordnung (8 - 11) an einer fahrzeugseitigen Komponente oder an einer sitzseitigen Komponente befestigbar ist,
- wobei eine Spindelöffnung (2) zum Durchführen einer Spindel (1) längs einer Spindelöffnungsachse (X) durch das Gehäuse (3; 3*) durchführt und
- wobei ein Innengewinde (4) im Gehäuse (3; 3*) im Bereich von dessen Spindelöffnung (2) zum Eingreifen in eine derart hindurchgeführte Spindel (1) ausgebildet ist zum Verstellen des Gehäuses (3; 3*) und der Spindel (1) relativ zueinander längs der Spindelöffnungsachse (x),
**dadurch gekennzeichnet, dass**
- das Innengewinde (4) in einer Spindelmutter (5) ausgebildet ist und die Spindelmutter (5) im Gehäuse (3; 3*) relativ zu der Spindelöffnungsachse (X) verstellbar gelagert ist.

2. Spindel-Lageranordnung nach Anspruch 1, bei welcher die Spindelöffnung (2) zumindest abschnittsweise einen größeren Innendurchmesser (dö) als ein Durchmesser (ds) der Spindel (1) der aufweist.

3. Spindel-Lageranordnung nach Anspruch 1 oder 2, bei welcher die Spindelmutter (5) im Gehäuse (3; 3*) in seitlicher Richtung (Y; Y*) zu der Spindelöffnungsachse (X) verstellbar gelagert ist.

4. Spindel-Lageranordnung nach Anspruch 1, 2 oder 3, bei welcher die Spindelmutter (5) im Gehäuse (3; 3*) um einen Winkel (ω) um eine in seitlicher Richtung (Y, Y*) zu der Spindelöffnungsachse (X) verlaufende Drehachse drehbar gelagert ist.

5. Spindel-Lageranordnung nach Anspruch 3 oder 4, bei welcher diese seitliche Richtung (Y) in Richtung eines Befestigungselements der Befestigungsanordnung (8 - 11) und/oder quer zu sowohl der Spindel (1) als auch dem sitz- oder bodenseitigen Befestigungselement durch diese hindurch verläuft.

6. Spindel-Lageranordnung nach Anspruch 3 oder 4, bei welcher diese seitliche Richtung (Y*) parallel zur Erstreckungsrichtung eines Befestigungselements der Befestigungsanordnung (8 - 11) und/oder parallel zu einer ebenen Erstreckung eines Befestigungselements der Befestigungsanordnung (8 - 11) und quer zur Spindelöffnungsachse (X) verläuft.

7. Spindel-Lageranordnung nach einem vorstehenden Anspruch, bei welcher das Innengewinde (4) in der Spindelmutter (5) zum drehbaren aber spielfreien Aufnehmen der Spindel (1) ausgebildet ist.

8. Spindel-Lageranordnung nach einem vorstehenden Anspruch, bei welcher die Spindelmutter (5) mittels zumindest eines Dämpfungselements (7) elastisch in dem Gehäuse (3; 3*) gelagert ist.

9. Spindelantrieb in einem Sitzlängsverstellgetriebe mit einer Spindel-Lageranordnung nach einem vorstehenden Anspruch.
